Europäisches Patentamt

European Patent Office

Office européen des brevets

(11) Numéro de publication: **0 415 844 A1**

## DEMANDE DE BREVET EUROPEEN

(21) Numéro de dépôt: **90402380.1**

(22) Date de dépôt: **28.08.90**

(51) Int. Cl.⁵: **B60K 5/12, F16F 1/42**

(30) Priorité: **30.08.89 FR 8911389**

(43) Date de publication de la demande:
**06.03.91 Bulletin 91/10**

(84) Etats contractants désignés:
**BE DE ES GB IT LU NL SE**

(71) Demandeur: **HUTCHINSON**
**2 rue Balzac**
**F-75008 Paris(FR)**

(72) Inventeur: **Simon, Jean-Michel**
**86, rue de Chatillon**
**F-92140 Clamart(FR)**

(74) Mandataire: **Picard, Jean-Claude Georges et al**
**Cabinet Plasseraud 84, rue d'Amsterdam**
**F-75009 Paris(FR)**

(54) **Dispositif de suspension élastique, en particulier pour moteur de véhicule.**

(57) Dispositif comportant un système élastique à faible raideur (2) pour supporter le moteur (1) et une structure rigide (4) solidaire du moteur et dont le déplacement vertical est limité dans les deux sens par des butées à forte raideur (3). L'invention consiste à monter en série avec le moteur et le système à faible raideur un organe moteur de rattrapage de position (5) commandé par une chaîne d'asservissement (6, 7, 8, 9), de sorte à maintenir le centrage de la structure rigide (4) entre les butées (3) même lors de fortes variations de la charge exercée par le moteur (1) sur le système (2).

FIG. 2.

EP 0 415 844 A1

## DISPOSITIF DE SUSPENSION ÉLASTIQUE, EN PARTICULIER POUR MOTEUR DE VÉHICULE.

L'invention concerne un dispositif de suspension élastique, en particulier pour moteur de véhicule, comprenant un système élastique à raideur relativement faible, supportant le moteur, et des butées à raideur relativement grande et propres à limiter dans les deux sens les débattements verticaux du moteur, lequel est normalement centré par rapport à ces butées.

La charge appliquée sur ce dispositif par le moteur comprend le poids du moteur, à l'arrêt ou tournant à vide, (cas dans lequel, comme indiqué plus haut, le moteur est normalement "centré" par rapport à ses butées), poids auquel s'ajoutent, en marche normale, les efforts engendrés dans ce dispositif par la reprise du couple moteur.

A vide, un tel dispositif de suspension donne satisfaction, ledit système élastique à raideur relativement faible assumant pleinement son rôle, qui est d'empêcher ou d'atténuer la propagation des bruits et vibrations, tandis que les butées à raideur plus grande, et possédant en principe un effet amortisseur, assurent la limitation du "hachis".

Par contre, au cours de la marche normale du véhicule, la reprise du couple moteur donne lieu à une augmentation de charge trop importante pour qu'elle puisse être encore reprise par le système élastique, le moteur reste en appui sur l'une des butées à grande raideur, et l'amortissement des sons et vibrations est alors fortement dégradé.

On a tenté de remédier à cet inconvénient en utilisant des ressorts à caractéristique élastique non linéaire - dont la raideur croît avec la charge - mais cela ne conduit qu'à un compromis entre les conditions de fonctionnement à vide et en charge, qui ne peut être entièrement satisfaisant.

Selon une autre solution envisagée, on utilise des butées "actives", qui s'effacent progressivement après avoir joué leur rôle de limiteurs de débattements, ce qui permet à nouveau au moteur en charge de n'être supporté que par le système élastique à faible raideur, et d'améliorer ainsi l'amortissement acoustique. Cependant on conçoit que ce principe conduit à autoriser des débattements considérables du moteur, qui peuvent être incompatibles avec son environnement (encombrement, connexions, etc..). En outre, il s'agit d'un système compliqué, et l'asservissement des butées s'avère très difficile à mettre au point.

Le but de la présente invention est de remédier à ces inconvénients de la technique antérieure, et d'assurer des conditions optimales d'amortissement des bruits et vibrations tant lorsque le moteur est en charge que lorsqu'il est à vide.

A cet effet, un dispositif de suspension élastique du type général défini au début sera, conformément à l'invention, essentiellement caractérisé en ce qu'il comporte en outre un organe moteur de rattrapage de position monté en série avec ledit moteur et ledit système élastique, la commande de cet organe de rattrapage étant asservie à la position verticale du moteur, de manière telle que lors de variations importantes de la charge exercée verticalement par le moteur sur ledit système élastique, ledit moteur se trouve automatiquement recentré par rapport auxdites butées à raideur relativement grande.

Ainsi, on obtient que le moteur reste en permanence "centré" entre les butées et reste donc supporté seulement par le système élastique à raideur relativement faible, sans pour autant lui autoriser de forts débattements, le jeu entre les butées à forte raideur pouvant rester très faible.

En d'autres termes, le moteur conserve les très faibles débattements verticaux qui seraient les siens s'il était supporté par un dispositif de suspension à grande raideur, alors qu'il est supporté en fait par un système élastique à faible raideur.

Celui-ci conserve entièrement ses caractéristiques d'amortissement des bruits et vibrations, même lorsque la charge exercée sur lui par le moteur varie fortement, ce qui n'a pour effet que de le faire varier beaucoup en longueur, précisément en fonction de cette variation de la charge.

Quant à sa structure, un dispositif conforme à l'invention se caractérise essentiellement par une unité d'asservissement dont la sortie de commande est reliée audit organe de rattrapage et dont l'entrée est reliée à un détecteur de la position verticale du moteur.

Il est à noter que le temps de réponse de la chaîne d'asservissement, et en particulier de cette unité d'asservissement, n'a pas besoin d'être très court, car les passagers du véhicule pourront s'accommoder d'une courte période transitoire d'inconfort. Ainsi, on pourra accepter que le moteur, sous l'effet du couple de réaction, vienne momentanément en butée sur l'une des butées à relativement grande raideur, son "recentrage" entre les butées, par l'intermédiaire dudit organe de rattrapage, n'intervenant qu'avec un certain temps de retard. Cela permet d'utiliser une unité d'asservissement simplifiée, relativement peu encombrante et peu coûteuse, et de limiter fortement l'énergie consommée par l'organe moteur de rattrapage de position.

Cela distingue encore favorablement le dispositif de l'invention par rapport aux dispositifs connus dans lesquels on réinjecte mécaniquement sur le moteur une perturbation identique mais en opposition de phase avec celle qui est détectée, ce qui exige bien entendu des temps de réponse très courts, une grande dépense d'énergie de compensation, et par suite un dimensionnement et un prix importants des organes de la chaîne d'asservissement, qui sont très sollicités.

Comme organe moteur de rattrapage, on pourra ainsi utiliser, par exemple, un vérin hydraulique ou pneumatique, notamment si les sources d'alimentation correspondantes existent déjà sur le véhicule, ou encore un moteur électrique, ces organes pouvant tous être de puissance limitée.

Quant audit système élastique à raideur relativement faible, il pourra être constitué par toute sorte de ressort métallique ou en matériau composite ou élastomère, ou encore pneumatique ou hydropneumatique, dès lors qu'il est à faible raideur, qu'il est capable de porter la charge, qu'il est peu sujet au fluage (quoique ce fluage puisse être compensé aussi par l'organe de rattrapage), et qu'il a une bonne tenue en fatigue.

Avantageusement, on pourra utiliser à cet effet un ressort en matériau composite de forme tubulaire, dont l'axe est disposé horizontalement, ou un ressort composite à lames, ce ressort étant pourvu de moyens de liaison de sa paroi, d'une part au moteur et d'autre part audit organe moteur de rattrapage de position.

Les ressorts de ce type sont aussi très résistants vis-à-vis des agents extérieurs et sont notamment insensibles à la corrosion, tout en présentant intrinsèquement d'excellentes propriétés d'amortissement des bruits et vibrations, et en pouvant subir une fatigue importante.

Pour ce qui est des butées à raideur relativement grande, elles seront de préférence du type à raideur progressive en fonction de la charge, et posséderont une caractéristique amortissante. A cet effet, on pourra utiliser avantageusement des butées en caoutchouc amortissant alvéolé, avec une forme appropriée pour assurer la progressivité de la raideur, et éventuellement un remplissage en matériau amortissant.

Ces butées seront ainsi aptes à absorber en souplesse les chocs liés aux à-coups de couple.

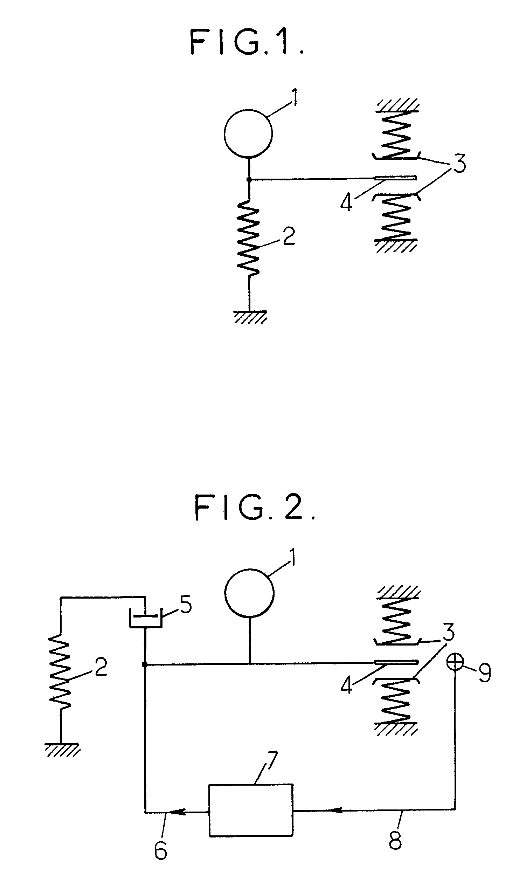

Dans les dessins ci-annexés, les figures 1 et 2 sont des schémas de princpe permettant de mieux comprendre ce qui a été expliqué au début : la **figure 1** montre le schéma de la technique de base (sans système de compensation), et la **figure 2** la technique de l'invention.

Sur ces figures, 1 désigne le moteur, 2 le système élastique à raideur relativement faible, et 3 les butées à raideur relativement élevée, 4 désignant une structure rigide propre à se déplacer entre ces butées et solidaire du moteur 1.

Selon l'invention, on a ajouté un organe moteur de rattrapage de position 5, en série avec le moteur 1 et le système 2 et relié à la sortie de commande 6 d'une unité d'asservissement 7 dont l'entrée 8 est reliée à un détecteur 9 de la position de la structure rigide 4.

On voit bien qu'avec un tel schéma l'organe 5 permettra en permanence d'ajuster la tension du système 2 pour l'adapter à la charge du moteur 1 et assurer ainsi le "recentrage" du moteur, par rapport aux butées 3, en ne lui autorisant qu'un très faible débattement vertical (distance entre les butées 3 seulement de quelques mm), la variation nécessaire de la tension du système 2 étant assurée par la déformation que lui fait subir l'organe moteur 5.

Avec le système de la figure 1, au contraire, on voit qu'une variation de la charge du moteur 1 se traduira très rapidement par une mise en butée de la structure 4 sur l'une des butées 3, faisant perdre toute efficacité au système à faible raideur 2, relayé alors par un système à forte raideur, impropre à absorber correctement les bruits et vibrations.

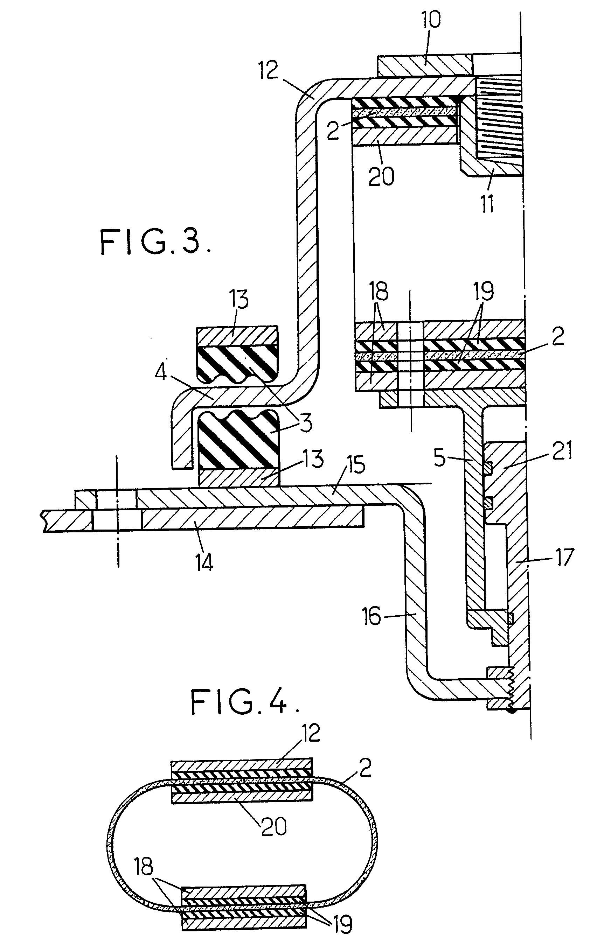

A la **figure 3**, on a représenté en demi-coupe axiale la partie purement mécanique d'un mode de réalisation pratique du dispositif de la figure 2, la **figure 4** étant une vue en coupe transversale du ressort en matériau composite de forme tubulaire, ainsi que de ses moyens de liaison au moteur 1 et à l'organe 5.

Sur ces figures, on a repris dans la mesure du possible les mêmes références que sur la figure 2 pour désigner les mêmes organes ou les organes jouant le même rôle.

Sur la figure 3, 10 désigne une structure solidaire du moteur et propre à assurer la solidarisation, par l'intermédiaire d'un plot axial 11 à taraudage intérieur, d'une part entre ce moteur et une structure rigide 12, comportant à sa base la structure rigide précitée 4, et d'autre part entre ce même moteur et le système 2 à raideur relativement faible.

Les butées relativement rigides ont encore été référencées 3 ; un exemple de leur structure possible a été décrit plus haut. Ces butées comportent une armature rigide 13 grâce à laquelle elles peuvent être solidarisées de la carrosserie 14 du véhicule.

Cette liaison s'effectue ici avec interposition de la collerette 15 d'une structure rigide 16 dont est solidarisé, axialement, l'organe mobile 17 (piston) d'un vérin - par exemple hydraulique - 5. Le corps de ce vérin 5 est fixé quant à lui au système élastique 2 par des moyens de liaison quelconques (rivets ou analogues), situés à l'opposé des moyens précités de liaison de ce système 2 au moteur.

Sur la figure 4, on voit que l'on utilise comme système élastique 2 un organe tubulaire à section transversale allongée et d'axe horizontal, lequel organe est avantageusement constitué d'un matériau composite (résine armée de fibres résistantes), pour les raisons indiquées plus haut.

Les moyens de liaison de cet organe tubulaire 2 au vérin 5 comprennent de préférence des plaques de maintien telles que 18, disposées de part et d'autre de la paroi de l'organe 2, avec interposition d'une couche 19 de matériau élastique, par exemple en élastomère.

Le même mode de liaison est prévu du côté moteur, la paroi de l'organe tubulaire 2 étant serrée entre une plaque intérieure 20 et la structure rigide 12, là encore avec interposition d'une couche d'élastomère ou analogue.

Ceci étant, on voit qu'en contrôlant (en fonction de la position détectée de la structure 4) la différence entre les pressions qui règnent de part et d'autre de la tête 21 du piston 17 de vérin, on pourra, en fonction par conséquent de la charge exercée sur le dispositif par le moteur, modifier dans le sens approprié la tension du système élastique 2 pour maintenir la structure rigide 4 centrée entre les butées 3, ceci avec les résultats déjà indiqués.

## Revendications

1. Dispositif de suspension élastique, en particulier pour moteur de véhicule, comprenant un système élastique à raideur relativement faible, supportant le moteur, et des butées à raideur relativement grande et propres à limiter dans les deux sens les débattements verticaux du moteur, lequel est normalement centré par rapport à ces butées, caractérisé en ce qu'il comporte en outre un organe moteur de rattrapage de position (5) monté en série avec ledit moteur (1) et ledit système élastique (2), la commande (6) de cet organe de rattrapage (5) étant asservie à la position verticale du moteur (1), de manière telle que lors de variations importantes de la charge exercée verticalement par le moteur sur ledit système élastique (2), ledit moteur se trouve automatiquement recentré par rapport auxdites butées (3) à raideur relativement grande.

2. Dispositif selon la revendication 1, caractérisé en ce qu'il comporte une unité d'asservissement (7) dont la sortie de commande (6) est reliée audit organe de rattrapage (5) et dont l'entrée (8) est reliée à un détecteur (9) de la position verticale du moteur (1).

3. Dispositif selon la revendication 1 ou 2, caractérisé en ce que ledit organe moteur de rattrapage (5) est constitué par un vérin (hydraulique ou pneumatique).

4. Dispositif selon la revendication 1 ou 2, caractérisé en ce que ledit organe moteur de rattrapage (5) est constitué par un moteur électrique.

5. Dispositif selon l'une quelconque des revendications précédentes, caractérisé en ce que ledit système élastique à raideur relativement faible (2) est constitué par un ressort en matériau composite de forme tubulaire, dont l'axe est disposé horizontalement, ou d'un ressort composite à lames, ce ressort étant pourvu de moyens de liaison (10 à 12 et 18 à 20) de sa paroi, d'une part au moteur (1) et d'autre part audit organe moteur (5) de rattrapage de position.

6. Dispositif selon l'une quelconque des revendications précédentes, caractérisé en ce que lesdites butées à raideur relativement grande (3) sont du type à raideur progressive en fonction de la charge, et possèdent également une caractéristique amortissante.

# FIG.1.

# FIG.2.

FIG.3.

FIG.4.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 081 085 (NISSAN MOTOR CO LTD) <br> * page 8, ligne 20 - page 9, ligne 17; revendication 1; figure 5 * | 1-4 | B 60 K 5/12 <br> F 16 F 1/42 |
| A | FR-A-2 465 927 (NISSAN MOTOR CO LTD) <br> * page 7, ligne 29 - page 9, ligne 3; revendication 2; figure 7 * | 1-4 | |
| A | PATENT ABSTRACTS OF JAPAN vol. 5, no. 199 (M-102)(871) 17 décembre 1981, <br> & JP-A-56 116519 (NISSAN JIDOSHA KK) 12 septembre 1981, <br> * le document en entier * | 1,3 | |
| A | EP-A-0 042 068 (MBB GMBH) <br> * abrégé; figure 4 * | 5 | |
| A | PATENT ABSTRACTS OF JAPAN vol. 1, no. 101 (M-77)(2903) 8 septembre 1977, <br> & JP-A-52 41775 (TOYOTA GOSEI KK) 31 mars 1977, <br> * le document en entier * | 6 | |
| | | | **DOMAINES TECHNIQUES RECHERCHES (Int. Cl.5)** |
| A | PATENT ABSTRACTS OF JAPAN vol. 8, no. 116 (M-299)(1553) 30 mars 1984, <br> & JP-A-59 23139 (TOYOTA JIDOSHA KK) 6 février 1984, <br> * le document en entier * | 1 | F 16 F <br> B 60 K |

Le présent rapport de recherche a été établi pour toutes les revendications

| Lieu de la recherche | Date d'achèvement de la recherche | Examinateur |
|---|---|---|
| La Haye | 17 décembre 90 | PEMBERTON P.E.E. |